**Europäisches Patentamt**

**European Patent Office**

**Office européen des brevets**

(19)

(11) Veröffentlichungsnummer: **0 317 961**
**A2**

(12) # EUROPÄISCHE PATENTANMELDUNG

(21) Anmeldenummer: **88119430.2**

(22) Anmeldetag: **22.11.88**

(51) Int. Cl.⁴: **F24F 7/08 , A01K 1/00**

(30) Priorität: **25.11.87 DE 8715600 U**

(43) Veröffentlichungstag der Anmeldung:
**31.05.89 Patentblatt 89/22**

(84) Benannte Vertragsstaaten:
**AT CH DE FR LI**

(71) Anmelder: **Schönhammer, Johann**
**Niederreuth 131**
**D-8317 Mengkofen(DE)**

(72) Erfinder: **Schönhammer, Johann**
**Niederreuth 131**
**D-8317 Mengkofen(DE)**

(74) Vertreter: **Riederer Freiherr von Paar zu**
**Schönau, Anton et al**
**Van der Werth, Lederer & Riederer Freyung**
**615 Postfach 2664**
**D-8300 Landshut(DE)**

(54) **Untere Abschlusswand einer Wanne, die den unteren Abschluss eines Ab- und Zuluftschachts bildet.**

(57) Den unteren Abschluß eines Ab- und Zuluftschachts (1), insbesondere mit Wärmetauscher zur Stallentlüftung, bildet eine Wanne (13), die eine ein offenes Rechteck bildende Oberseite zum Anschluß an den Schacht (1), zwei gegenüberliegende, an gegenüberliegenden Seiten des Rechtecks ansetzende Seitenwände (14) und eine zwischen den beiden anderen gegenüberliegenden Seiten des Rechtecks verlaufende, sich in Querrichtung von Seitenwand zu Seitenwand erstreckende, aus kettenartig aneinanderhängenden Feldern (15a, -b, -c, -d) bestehende Abschlußwand (15) aufweist. Die Felder (15a ...) der Abschlußwand (15) hängen über Scharniere (16) aneinander, so daß sie zur Herstellung und zum Transport flachgestreckt werden kann, wodurch der Aufwand für diese untere Wannen-Abschlußwand erheblich vermindert werden kann.

*Fig. 1*

## Untere Abschlußwand einer Wanne, die den unteren Abschluß eines Ab- und Zuluftschachts bildet

Die Erfindung bezieht sich auf die untere Abschlußwand einer Wanne nach dem Oberbegriff des Anspruchs 1. Die Wanne schließt unten einen Ab- und Zuluftschacht, wie er insbesondere zur Stallentlüftung verwendet wird, ab. Sichtbar von einem solchen Ab- und Zuluftschacht sind zunächst zwei nebeneinanderliegende, durch eine Querwand voneinander getrennte rechteckige Löcher in der Stalldecke, durch die als Kaminwände Kunststoffplatten nach unten vorstehen. Über den Löchern schließt sich jeweils ein Kamin an. Zumeist ist der an eines der rechteckigen Löcher anschließende Kamin ein offener Abluftkamin, der Entlüftung im Sommer dient, während im anderen Kamin ein Wärmetauscher angeordnet ist, der zugleich Abluft nach oben und Zuluft nach unten transportiert und zwischen diesen Luftströmen einen Wärmeaustausch durchführt. Eine Umstellklappe zwischen den beiden Lüftungsarten und ein aerodynamisch günstiger unterer Abschluß des Wärmetauschers so, daß eine einigermaßen gleichmäßige Verteilung der Luftströme auf seine verschiedenen Kanäle stattfindet, ergeben einen zusätzlichen Raumbedarf noch unterhalb der Ebene der Stalldecke. Dies hat zur Folge, daß die den unteren Abschluß bildende Wanne eine nennenswerte Tiefe aufweisen muß. Gemäß einer zweckmäßigen und üblichen Konstruktion trägt diese Wanne auch die Gebläse für die Abluft und die Zuluft. Diese Gebläse sitzen, damit nicht noch weiteres Volumen verbraucht wird, in den Luftdurchlässen der Wanne.

Die Herstellung der Wanne erweist sich als relativ aufwendig. Sie ist ein Tiefziehprodukt, das insbesondere in den Bereichen, in denen die Gebläse installiert werden, eine erhebliche Formstabilität aufweisen muß. Sollen Luftleitflächen mit Düsenfunktion im Bereich dieser Gebläse gleich beim Tiefziehen mit hergestellt werden, so ergeben sich Schwierigkeiten beim Ausformen, da diese Luftleitflächen unterschiedliche Orientierungen haben. Die bekannte Abschlußwanne weist noch den Nachteil auf, daß mit einem Werkzeug stets nur Wannen einer Größe hergestellt werden können, so daß Anpassungen an unterschiedliche Anforderungen und räumliche Gegebenheiten allenfalls in groben Schritten möglich und gerechtfertigt sind. Schließlich ist die bekannte Wanne auch hinsichtlich ihres Transportvolumens nicht optimal.

Demgegenüber soll durch die Erfindung die Wanne bzw. deren untere Abschlußwand gemäß dem Oberbegriff des Anspruchs 1 so weiterentwickelt werden, daß sie einfacher herstellbar und transportierbar und flexibler einsetzbar ist. Dies wird gemäß der Erfindung dadurch erreicht, daß die Flächen der Abschlußwand über Scharniere aneinanderhängen. Die Abschlußwand kann insofern in gestreckter Stellung hergestellt und transportiert werden und wird dann erst am Ort der Installation in die endgültige Konfiguration gebracht und mit den ebenfalls über Scharniere daranhängenden oder auch getrennt herangeschafften oder aus vorstehenden Teilen von Kaminschachtplatten gebildeten Seitenwänden verbunden, beispielsweise verschraubt oder verschweißt. Die Wanne bzw. die Abschlußwand oder ihre Teile lassen sich somit durch flaches Tiefziehen relativ einfach herstellen, und im Fall, daß eine etwas abweichende Konfiguration der Wanne verlangt wird, muß zur Einstellung der Winkel zwischen den Flächen der Abschlußwand nur die Gestalt der ebenen Seitenwände etwas variiert werden. Für diese beiden ebenen Seitenwände werden zumeist die unten vorstehenden Enden der Kaminplatten verwendet, sie können jedoch auch nach Anspruch 3 schon ab Werk mit der Abschlußwand entlang einer Kante verbunden sein, so daß die Wanne an der Baustelle gefaltet und montiert wird.

Nach Anspruch 4 ist die Abschlußwand, oder wenn die Seitenwände mit ihr zusammenhängen, die gesamte Wanne als ein einziges Ziehstück herstellbar. Relativ kleine Tiefenunterschiede, wie Randflansche, eine Kondenswasserrinne oder dergleichen benötigen nur wenig Ziehtiefe, so daß die Konstruktion sehr günstig herstellbar ist. Nach Anspruch 5 ist die Abschlußwand aus Teilen unterschiedlicher Festigkeit zusammengesetzt, wobei in optimierter Dimensionierung darauf geachtet werden kann, daß Wannenteile, in denen ein Gebläse montiert ist, sehr formstabil und starr sind, während Wannenteile, die nicht belastet sind, leichter dimensioniert werden können.

Als Scharniere eignen sich insbesondere flexible Kunststoffstege zwischen den einzelnen Wandfeldern, zumal es nicht auf eine hohe Falzzahl ankommt. Nach der Montage bleibt im allgemeinen die Konfiguration für die gesamte Betriebszeit der Wanne unverändert.

Nach den Ansprüchen 7 und 8 werden gleich bei der Herstellung der Abschlußwand Luftleitprofile, insbesondere mit Düsenfunktion, gebildet, insbesondere gezogen, an denen dann die Gebläse montiert werden. Die entsprechenden Gebläse können deshalb selbst auf derartige Profilflächen verzichten. Das Ausformen solcher beispielsweise geschwungenen konischer Profile macht keine Schwierigkeit, da diese Profile in der gestreckten Haltung der Abschlußwand alle gleiche Orientierung haben.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:

Fig. 1 in Seitenansicht einen Ab- und Zuluftschacht mit unterer Abschlußwanne im Querschnitt;

Fig. 2 eine Seitenansicht einer Abschlußwand der Wanne in gestreckter Anordnung;

Fig. 3 eine Ansicht entsprchend Fig. 2 für eine etwas abgewandelte Wanne;

Fig. 4 ein Draufsicht auf eine Ausführung der Wanne in auseinandergeklappter und gestreckter Anordnung;

Fig. 5 eine perspektivische Ansicht der Wanne in der Anordnung an einer Stalldecke;

Fig. 6 einen abgewandelten Ab- und Zuluftschacht mit unterer Abschlußwanne in schematischer perspektivischer Ansicht.

Ein Ab- und Zuluftschacht 1 besteht aus zwei Kaminen, nämlich einem leeren Kamin 2 für Abluft bei Lüftungsbetrieb und einem Kamin 3 mit Wärmetauscher für Abluft und Zuluft. Der Ab- und Zuluftschacht 1 schließt an eine Stalldecke 4 an, an der er mit einer insgesamt rechteckigen Öffnung in den Stall mündet. Handelt es sich bei den Kaminen um Rundkamine, so ist die Öffnung insgesamt achterförmig. Im Mittelbereich der Darstellung des Kamins 3 ist der Wärmetauscher zur besseren Veranschaulichung querschnittartig dargestellt. Die Kamine 2 und 3 werden durch eine Trennwand 5 voneinander separiert. Über dem Kamin 2 wird der unter der Stalldecke 4 liegende Stall im Sommer entlüftet, die entsprechende Abluft ist durch strichpunktierte Pfeile eingezeichnet. Über den Kamin 3 wird im Winter sowohl die Abluft, die in Form schwarzer Pfeile eingezeichnet ist, abgeleitet, als auch die Zuluft, die in Form weißer Pfeile eingezeichnet ist, in den Stall geführt und hierbei erwärmt. Der Umstellung zwischen Sommerbetrieb und Winterbetrieb dient eine Umstellklappe 6, die um eine am unteren Ende der Trennwand 5 verlaufende Achse 7 verschwenkbar ist.

Der Erzeugung der gewünschten Luftströme dienen ein Abluftgebläse 11 und ein Zuluftgebläse 12, die in einer den unteren Abschluß des Ab- und Zuluftschachts 1 bildenden Wanne 13 montiert sind. Die Umstellklappe 6 ist so gestaltet, daß sie in ihrer einen Endstellung, die in der Zeichnung gestrichelt eingezeichnet ist, den vom Abluftgebläse 11 erzeugten Luftstrom in den leeren Kamin 2 leitet, während im Kamin 3 mit dem Wärmetauscher nur diejenigen Wärmetauscherkanäle, in denen die Zuluft nach unten gezogen wird, durchströmt werden können, während der Zugang zu den Abluftkanälen des Wärmetauschers durch die Umstellklappe 6 gesperrt ist. In der anderen, in der Zeichnung mit durchgezogenen Linien gezeichneten Endstellung der Umstellklappe 6 sperrt diese den Zugang zum offenen Kamin 2, während andererseits der Druckraum hinter dem Abluftgebläse 11 mit den unteren Enden der Abluftkanäle des Wärmetauschers im Kamin 3 kommuniziert. In diesem Betriebszustand wird also die vom Zuluftgebläse 12 angesaugte kalte Zuluft im Wärmetauscher durch die aufsteigende warme Abluft angewärmt.

Die Wanne 13, die im eingebauten Zustand an der Stalldecke befestigt ist und aus Gründen der Aerodynamik und des Luftwiderstands sowie wegen des Stellraums der Umstellklappe 6 und der Gestaltung des unteren Endes des Wärmetauschers von der Stalldecke 4 ziemlich weit in das Stallvolumen vorsteht, besteht aus zwei Seitenwänden 14 und einer sich zwischen den Seitenwänden quer erstreckenden und in Längsrichtung von der Deckenberührung an der einen Seite bis zur Deckenberührung an der anderen Seite verlaufenden Abschlußwand 15, die wiederum aus verschiedenen Feldern besteht, nämlich beim dargestellten Beispiel aus einem vertikalen Feld 15a, einem unter 45° angeordneten zweiten Feld 15b, einem sich hieran anschließenden, eine leichte Neigung bis etwa 5° zur Horizontalen annehmenden Feld 15c und einem sich hieran anschließenden vertikalen Feld 15d. Diese Felder und ihre Winkel können auch anders eingeteilt sein, bespielsweise, indem das Feld 15a fehlt oder das Feld 15d wiederum zwei Teile aufweist, die unterschiedliche Winkel zur Horizontalen einnehmen. Die einzelnen Felder 15a bis 15d sind über Scharniere 16, beim beschriebenen Beispiel also drei Scharniere, miteinander verbunden. Entsprechend dem rechteckigen Grundriß der Wanne 13 in Anpassung an die untere Öffnung des Ab- und Zuluftschachts 1 sind die Achsen der Scharniere 16 parallel zueinander. Da die Seitenwände 14 zunächst noch nicht oder nicht entlang sämtlichen Kanten mit der Abschlußwand 15 verbunden sind, erlauben die Scharniere 16 bei der Herstellung und beim Transport eine ausgestreckte, weitgehend flache Anordnung der Abschlußwand 15. Die Seitenwände 14 der fertig montierten Wanne sind zweckmäßigerweise Zuschnitte aus den unteren Enden von längsseitigen Kaminschacht-Wandplatten, also von Kunststoffplatten, die von der Decke nach unten vorstehen.

Das Feld 15b der Abschlußwand 15 weist einen Luftdurchlaß 21 auf, in dem das Abluftgebläse 11 montiert ist, und das Feld 15d weist einen Luftdurchlaß 22 auf, in dem das Zuluftgebläse 12 montiert ist. Der Luftdurchlaß 21 ist von einem Abluftleit-Profilflansch 23 umgeben, der einstückig mit dem umgebenden Material des Felds 15b ausgebildet ist, und der Luftdurchlaß 22 ist von einem Zuluftleit-Profilflansch 24 umgeben, der mit dem umgebenden Material des Felds 15d einstückig ausgebildet ist. Diese Profilflansche ergeben eine gewisse Düsencharakteristik; sie weisen eine leicht trichterförmige oder geschwungene konische Form auf und führen aufgrund dieser Form den hindurchgeleiteten Luftstrom. Da diese Profilflansche am betreffenden Feld angeformt sind, genügt es, daß die Gebläse 11 bzw. 12 ohne eigene Luftleitprofile sind und nur mit (nicht dargestellten) Streben in den jeweiligen Luftdurchlässen befestigt sind.

Im unteren Feld 15c weist die Wanne 13 eine übliche Kondenswasserrinne 25 auf, die in einen Anschlußstutzen für eine Ableitung übergeht.

Fig. 2 zeigt die Abschlußwand 15 in Seitenansicht in ausgestrecktem Zustand, also in der Form, in der sie hergestellt und transportiert wird. Die Abschlußwand 15 gemäß Fig. 2 ist einstückig durch Flachziehen hergestellt. Sie besteht aus Kunststoffmaterial, das im Bereich der Scharniere etwas dünner ist, so daß hier die erforderliche Flexibilität gegeben ist. Im Bereich der Felder 15b und 15d, die die Gebläse 11 und 12 tragen, muß das Material eine erhöhte Wandstärke aufweisen, um dort die erforderliche Festigkeit zu ergeben. In Fig. 2 ist die Abschlußwand 15 ohne die Seitenwände 14 dargestellt, diese werden deshalb an der Baustelle entlang ihren Rändern mit den Seitenrändern der Abschlußwand 15 verbunden, beispielsweise verschraubt oder verschweißt, was bei manchen Materialien einfach mit Hilfe eines Lötkolbens möglich ist. Die Seitenwände haben ebenfalls eine ausreichende Wandstärke, da sie die Felder 15b und 15d starr halten und die Gewichtskräfte aufnehmen müssen.

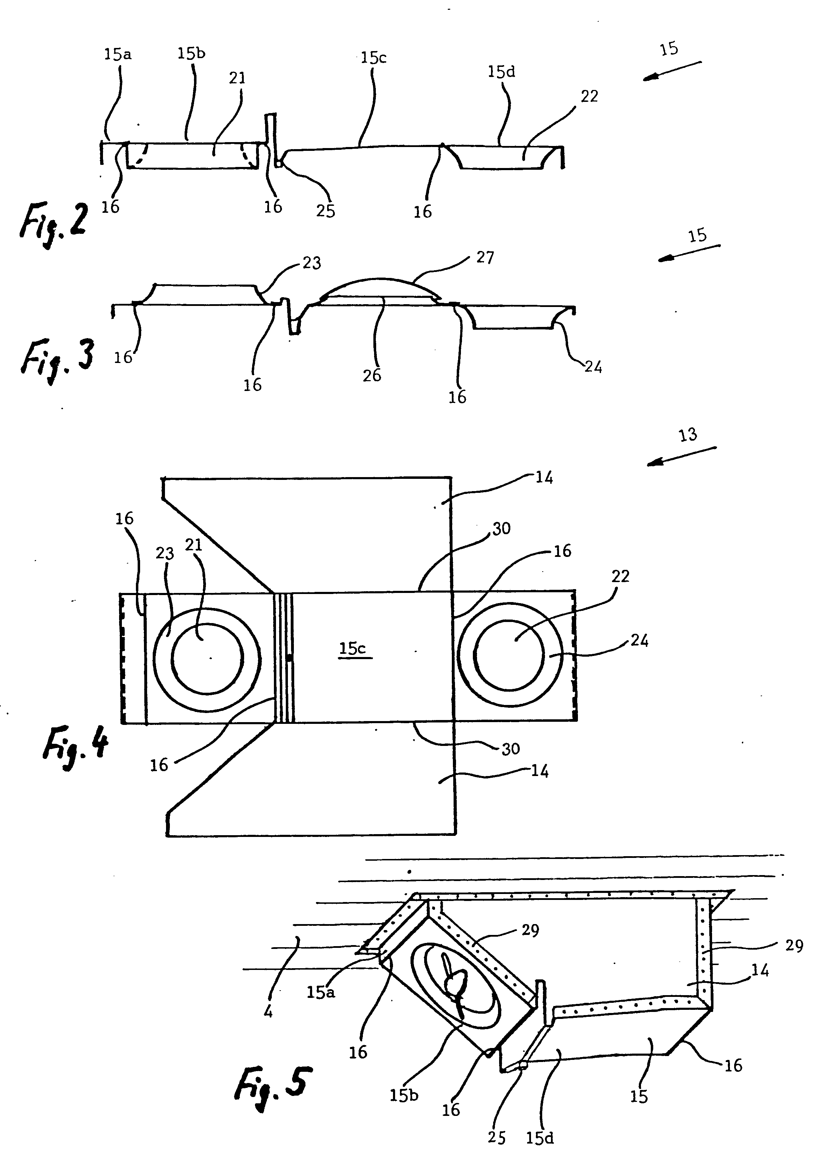

Fig. 3 zeigt eine etwas abgewandelte Ausführung der Abschlußwand 15. Ihre Felder 15a, 15b, 15c und 15d sind getrennte Teile, und die Scharniere 16 sind durch aufvulkanisierte Materialstreifen hergestellt. Aus Gründen der Formstabilität bestehen die Felder 15a, 15b und 15d aus sehr formstabilem Material, beispielsweise aus glasfaserverstärktem Kunstharz (GFK), während das Feld 15c, das mechanisch weniger belastet ist, aus einem thermoplastischen Kunststoff besteht. Das Feld 15c weist außerdem eine Revisionsöffnung 26 mit einem Deckel 27 auf.

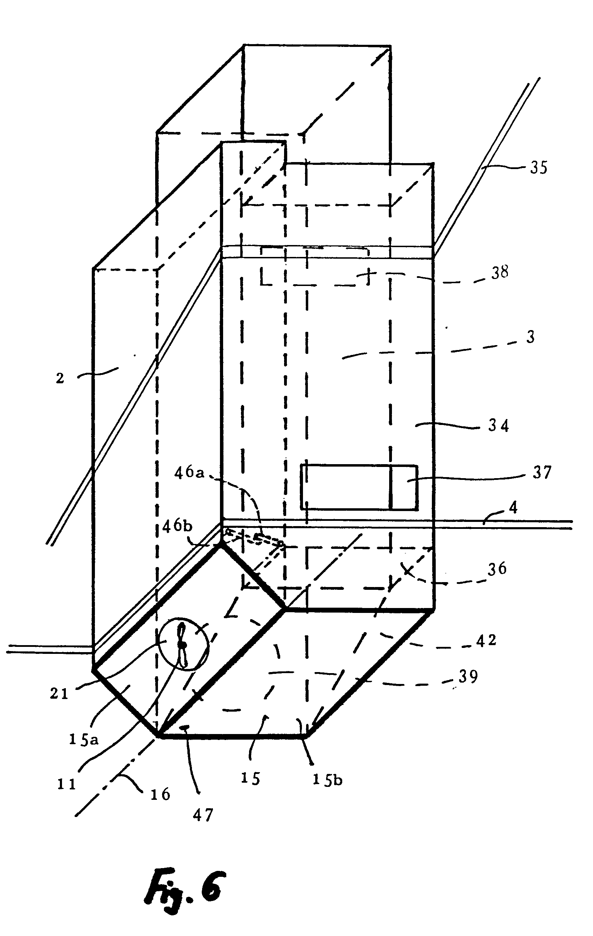

Gemäß Fig. 4 sind die Seitenwände 14 einstückig mit der Abschlußwand 15 ausgebildet. Sie hängen über Scharniere 30, die den Scharnieren 16 entsprechen, an den Seitenkanten des mittleren Felds 15c. Die Befestigung an diesen Kanten ist jedoch nicht zwingend, die Seitenwände 14 könnten ebensogut mit irgendwelchen ihrer Kanten an einem anderen der Felder der Abschlußwand 15 angelenkt sein.

Während nach Fig. 3 die Wanne aus getrennten Feldern und Seitenwänden zusammengesetzt ist und nach Fig. 4 die gesamte Wanne einstückig hergestellt ist, sind hier auch Zwischenlösungen möglich, beispielsweise, daß einzelne Felder und/oder Seitenwände gemeinsam einstückig gebildet sind und andere Felder und/oder Seitenwände über aufgesetzte Scharnierstreifen oder im Fall der Seitenwände auch über eine später hergestellte starre Verbindung angeschlossen sind.

Fig. 5 zeigt die an der Decke angebrachte Wanne in einer Ausführungsform, in der die Seitenwände 14 die unteren Enden von Kaminschacht-Wandtafeln sind und die Abschlußwand 15 Flansche 29 aufweist, die um 90° umgebogen und mit den Seitenwänden verschraubt sind.

Fig. 6 zeigt einen Schacht mit drei vertikalen Kamin, deren oberer Abschluß zur besseren Veranschaulichung der getrennten Kamine in unterschiedlicher Höhe endend dargestellt ist. Im allgemeinen wird allerdings der Schacht für alle drei Kamine oben flach enden. Es handelt sich einerseits um den Kamin 2 zum Fortleiten der Abluft im Sommer, um den Kamin 3 mit Wärmetauscher zum Zuleiten der Zuluft und Ableiten der Abluft im Winter und um einen Kamin 34 zum Ansaugen der Zuluft aus dem Raum unter einem schematisch angedeuteten Dach 35 in den Wärmetauscher. Der Kamin 34 reicht nicht bis zum unteren Ende des Schachts, sondern endet etwas höher an einem geschlossenen Boden 36. Nach außen in den Raum zwischen der Stalldecke 4 und dem Dach 35 weist er eine Ansaugöffnung 37 auf und in seinem oberen Teil hat er ein Fenster 38 zum parallellaufenden Kamin 3 mit dem Wärmetauscher. Dieser ist an seinem unteren Ende einerseits abgeschrägt und weist dort Eingänge für die Abluft auf, und ist andererseits mit seinen Zuluftkanälen an eine nach außen öffnende Öffnung 39 angeschlossen, in der ein Zuluftgebläse angeordnet ist.

Unterhalb der Kamine 3 und 34 befindet sich ein freier Raum 42 in Form eines rechtwinkligen Trapezoides, der mit dem unteren Ende des Kamins 2 kommuniziert. Das untere Ende des Kamins 2 ist abgeschrägt, wobei die Schrägungs-Verschwenkachse dieses unteren Endes zu derjenigen des unteren Endes des Kamins 3 mit Wärmetauscher um 90° gekreuzt ist.

Als Wanne kann man bei dieser Installation denjenigen Teil bezeichnen, der unter der Stalldecke 4 vorsteht. Diese Wanne wird wiederum nach unten durch die untere Abschlußwand 15 abgeschlossen, die entlang der hier einzigen Scharnierachse 16 geknickt ist. In Fig. 6 ist diese Abschlußwand 15 durch verstärkte Linien verdeutlicht. Sie besteht aus Feldern 15a, 15b, die in Übereinstimmung mit den unteren Rändern der Schacht-Seitenwände gegeneinander einen Winkel von 135° einnehmen. Das Feld 15a weist den Luftdurchlaß 21 auf, in dem das Abluftgebläse 11 montiert ist.

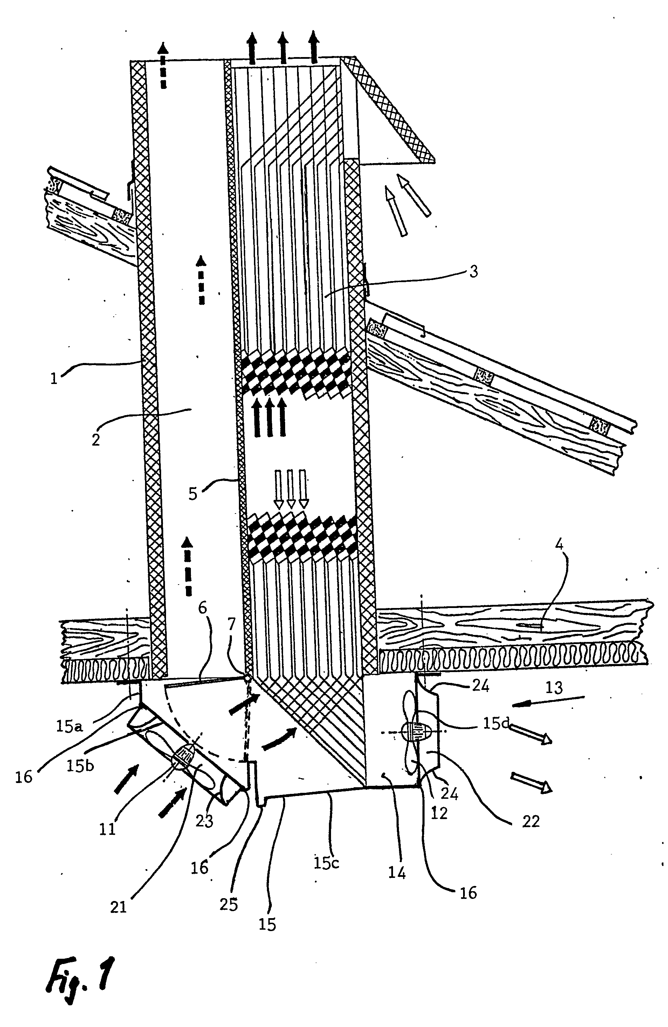

Die Klappe 6 gemäß Fig. 1 ist in der Ausführung nach Fig. 6 durch eine Doppelklappe mit zwei gegenläufig verschwenkbaren Klappenflügeln 46a, 46b ersetzt, die um an gegenüberliegenden Wänden des Kamins 2 angeordnete Achsen verschwenkbar sind und über an sich bekannte, in der Zeichnung nicht dargestellte Hebel gegenläufig synchronisiert sind, so daß sie sich zum Öffnen auseinanderbewegen. Die Gewichte der Klappen und die auf die Klappen aufgrund eines einseitigen Luftdrucks einwirkende Kraft heben sich in gewissem Umfang zwischen den beiden Klappenflächen auf, so daß diese leichter verstellbar sind, jedoch eine geringere Tendenz aufweisen, sich von selbst zu verstellen.

Das Feld 15b der unteren Abschlußwand 15 weist eine Kondenswasseröffnung 47 auf, über die im Wärmetauscher kondensiertes Wasser nach unten abtropfen kann. Ist die Abschlußwand ein Flachziehprodukt, so ist sie zweckmäßigerweise so geformt, daß von allen Seiten zu dieser Kondenswasseröffnung 47 hin ein leichtes Gefälle herrscht. In Abänderung der dargestellten Ausführung kann das Feld 15b noch eine Revisionsöffnung mit Deckel entsprechend der Ausführung nach Fig. 3 aufweisen.

An den Rändern ist die untere Abschlußwand 15 wiederum durch übliche Befestigungsmittel, die in Fig. 6 nicht im einzelnen dargestellt sind, insbesondere durch Schrauben, an den senkrechten Wannenwänden befestigt.

## Ansprüche

1. Untere Abschlußwand einer Wanne (13), die den unteren Abschluß eines Ab- und Zuluftschachts (1) bildet und eine ein offenes Rechteck bildende Oberseite zum Anschluß an den Schacht (1), zwei gegenüberliegende, an gegenüberliegenden Seiten des Rechtecks ansetzende Seitenwände (14) und die zwischen den beiden anderen gegenüberliegenden Seiten des Rechtecks verlaufende, sich in Querrichtung von Seitenwand zu Seitenwand erstreckende, aus kettenartig aneinanderhängenden Feldern (15a, -b, -c, -d) bestehende Abschlußwand (15) aufweist, dadurch gekennzeichnet, daß die Felder (15a ...) der Abschlußwand (15) über Scharniere (16) aneinanderhängen.

2. Abschlußwand nach Anspruch 1, dadurch gekennzeichnet, daß sie mit Schachtwänden als Seitenwänden verbunden ist.

3. Abschlußwand nach Anspruch 1, dadurch gekennzeichnet, daß sie Seitenwände über Scharniere (30) mit einem der Felder (15a ...) der Abschlußwand (15) zusammenhängen.

4. Abschlußwand nach einem der Ansprüche 1 bis 3, dadurch gekennzeichnet, daß sie einstückig aus Kunststoff hergestellt ist und die Scharniere (16, 30) dünnere Streifenbereiche sind.

5. Abschlußwand nach einem der Ansprüche 1 bis 3, dadurch gekennzeichnet, daß sie aus Teilen (14, 15a, ...) zusammengesetzt ist, die aus Material unterschiedlicher Festigkeit bestehen.

6. Abschlußwand nach Anspruch 5, dadurch gekennzeichnet, daß die Scharniere (16, 30) aufvulkanisierte Streifen aus zumindest entlang einer Knicklinie biegbarem Material sind.

7. Abschlußwand nach einem der Ansprüche 1 bis 6, in der Luftdurchlässe (21, 22) für die Abluft und die Zuluft gebildet sind, dadurch gekennzeichnet, daß die Luftdurchlässe (21, 22) jeweils einen aus der Ebene des betreffenden Abschlußwand-Felds (15b, 15d) vorstehenden Luftleit-Profilflansch (23, 24) aufweisen.

8. Abschlußwand nach Anspruch 7, dadurch gekennzeichnet, daß sie bzw. ihre mit Luftdurchlässen (21, 22) versehenen Felder (15b, 15d) Tiefziehprodukte sind.

**Fig. 1**

Fig. 2

Fig. 3

Fig. 4

Fig. 5

*Fig. 6*